# EUROPEAN PATENT APPLICATION

(11) **EP 1 971 090 A1**
(43) Date of publication of application: **17.09.2008**
(21) Application number: 06828328.2
(22) Date of filing: 14.12.2006
(51) Int. Cl.: H04L 12/58

(54) **A METHOD, SYSTEM AND DEVICE FOR TRANSMITTING IMS INSTANT MESSAGES**

(30) Priority: 15.12.2005 CN 200510120863
(71) Applicant: Huawei Technologies Co., Ltd., Longgang District Shenzhen 518129 (CN)
(72) Inventor: WANG, Lin, Guangdong 518129 (CN)
(74) Representative: Thun, Clemens
(86) International application number: PCT/CN2006/003412
(87) International publication number: WO 2007/068209

(57) **Abstract**

A method, a system and an apparatus for sending IMS instant messages are provided. The instant message includes at least one message body. The receiving terminal has a message receiving threshold. Under the situation that the size of the instant message is greater than the message receiving threshold, by replacing at least some of the original message bodies in the instant message with a new message body, the instant message is reconstructed so as to make the size of the reconstructed instant message not exceed the message receiving threshold. The reconstructed instant message is sent to the receiving terminal. The new message body contains a message body identifier corresponding to the original message body. The server may store the content of the at least some of the original message bodies and the message body identifier of the original message body. After the receiving terminal receives the instant message, the receiving terminal may selectively obtain the content of the original message body through the message body identifier. In accordance with the embodiments of the present invention, users' service experience can be strengthened, utilization rate of network resource is improved, and the restriction of the terminal's capacity to the size of the instant message is reduced.

## Description

### FIELD OF THE INVENTION

The present invention relates to an IMS instant message service, particularly to a method, a system and a device for sending IMS instant messages.

### BACKGROUND

A messaging service is a kind of service supported by IP Multimedia Subsystem (IMS). It allows sending and receiving messages among IMS users. The size of a message is not limited in terms of technical implementation.

The function provided by the messaging service mainly includes that the user may send multimedia instant messages via a messaging application server (AS) and may receive the multimedia instant messages sent by other users via the Messaging AS. The multimedia instant message may include text, image, audio or video.

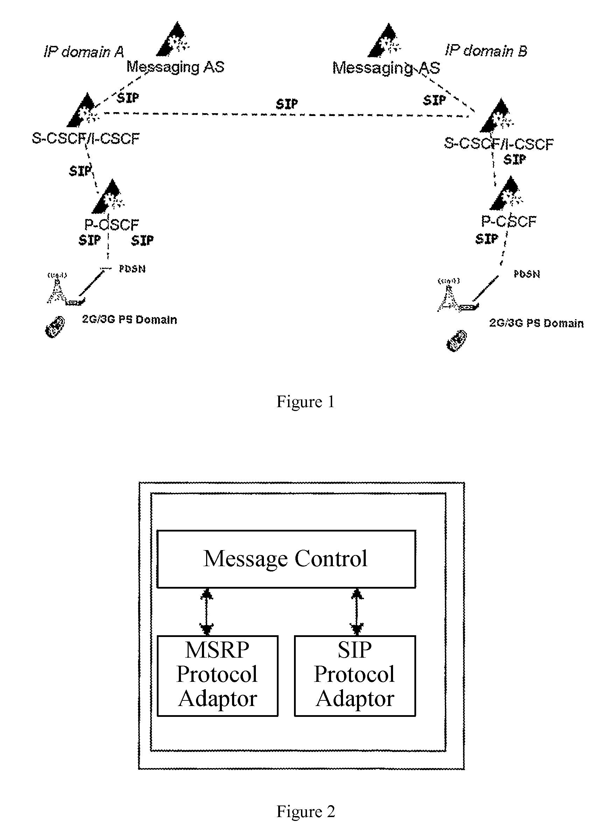

As far as the messaging service is concerned, in order to implement sending and receiving instant messages among users, the relevant device includes a receiving terminal, i.e. a user equipment (UE), a network proxy, a Messaging AS and so on. The network proxy generally refers to function entities such as a proxy CSCF (P-CSCF), a serving CSCF (S-CSCF), an interrogating CSCF (I-CSCF) and so on. The schematic view illustrating the networking of these devices is shown as figure 1 which will be described in more detail as follows.

As shown in figure 1, the UE is firstly connected to a base station and is accessed into the IMS via a packet data serving node (PDSN). In IMS, a control signaling is transmitted through the session initiation protocol (SIP), and a data flow may be transmitted through the SIP or the message session relay protocol (MSRP). The P-CSCF is the entrance of the SIP signaling in charge of interacting with the UE. The S-CSCF is a control server in charge of triggering a specific AS, e.g. a Messaging AS, and sending message to the receiving S-CSCF. The Messaging AS is in charge of processing specific messages. It may receive SIP and MSRP messages.

The process of sending a request is approximately as follows: When a UE wants to send a request, the sending UE is connected to a P-CSCF of the IMS via a base station and a PDSN. The P-CSCF transfers the request to the S-CSCF. The S-CSCF sends the request to the Messaging AS. After the Messaging AS has processed the request, the Messaging AS returns the request to the S-CSCF. The S-CSCF sends the request to the S-CSCF in the area where the receiving party is located. The receiving S-CSCF firstly triggers the request to the receiving Messaging AS, and then sends the request to the receiving UE after receiving the processed request.

The internal structure view of the Messaging AS is shown as figure 2. The SIP protocol adaptor is in charge of sending/receiving SIP messages and reporting the SIP messages to a message control unit. The MSRP protocol adaptor is in charge of receiving/ sending MSRP messages and reporting the MSRP messages to the message control unit. The message control unit is in charge of processing and storing messages.

As far as the receipt of instant messages is concerned, it may be generally implemented in two ways currently.

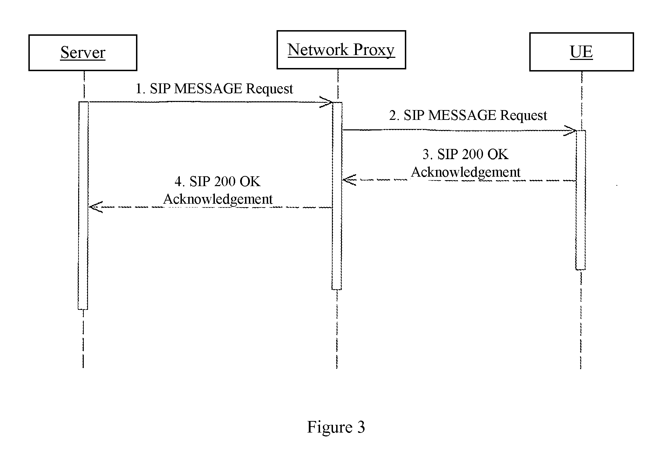

In one way, the server sends a complete message via SIP MESSAGE to the UE as shown in figure 3. The specific signaling flow is as follows:

Step 1 to 2, the server sends an SIP MESSAGE request to the UE. The message contains all the message bodies;

Step 3 to 4, the UE returns a message receipt acknowledgement.

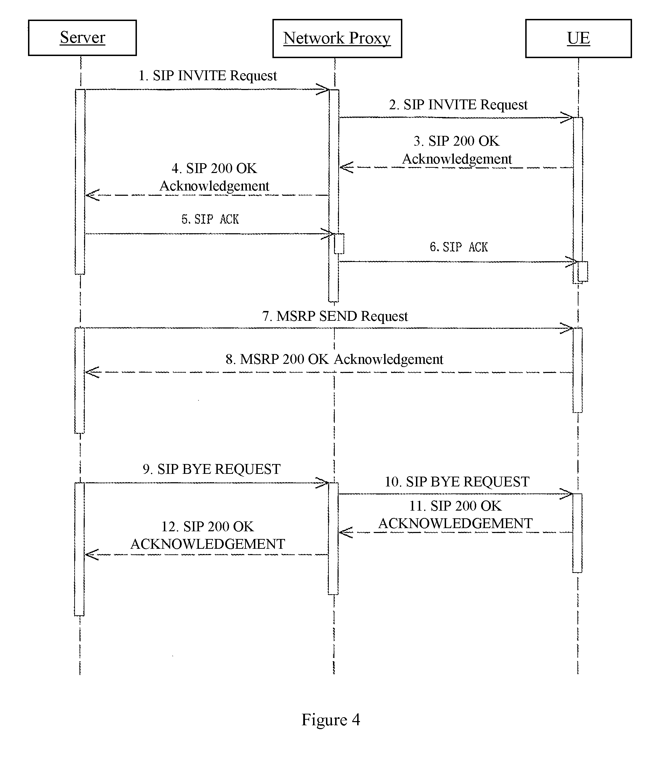

In another way, the server sends a complete message to the UE via SIP INVITE and MSRP SEND as shown in figure 4. The specific signaling flow is as follows:

Step 1 to 2, the server sends SIP INVITE to the UE for requesting to establish an MSRP link with the UE;

Step 3 to 4, the UE returns acknowledgement to the server and returns acknowledgement of establishing the MSRP link with the server;

Step 5 to 6, the server returns confirmation information to the UE;

Step 7, after the MSRP link between the server and the UE is established, the message body is sent to the UE via MSRP SEND;

Step 8, the UE returns acknowledgement of receiving the MSRP SEND message;

Step 9 to 10, the server sends SIP BYE to the user for noticing the UE to end the SIP session and cut off the MSRP link;

Step 11 to 12, the UE returns acknowledgement of receiving SIP BYE.

It should be noted that, for the sake of simplification, the process of receiving a message from the UE is not shown in figure 3 and figure 4 and the base station, PDSN and P-CSCF are omitted.

Because the bandwidth of the 3G network is broadened and the 3G network can intercommunicate messages with the Internet, the size of a message received by the 3G network is not limited theoretically. Comparatively speaking, the capacity of a user terminal, e.g. a cell phone seems limited resulting in a bottleneck of sending messages. In addition, there is big difference in terms of capacity of different user terminals, e.g. cell phones. If the cell phone of the user A has bigger capacity, and the cell phone of the user B has smaller capacity, the size of the instant message sent from the user A to the user B may probably exceed the capacity of the user B's cell phone. Under this situation, the user B may not be able to receive instant messages from the user A all the time because of the capacity restriction of a cell phone. Therefore, after the instant message passes many nodes, the instant message finally fails to be sent because the capacity of the receiving terminal is limited. This affects service experience of users and takes up network resource in vain.

### SUMMARY

The embodiment of the present invention provides a method, a system and a device for sending IMS instant message which overcomes the above deficiency.

The embodiment of the present invention provides a method for sending IMS instant messages. An instant message includes at least one message body. A receiving terminal has a message receiving threshold. The method includes the following steps:
under the situation that the size of the instant message is greater than the message receiving threshold,
replacing at least some of the original message bodies in the instant message with new message bodies so as to reconstruct the instant message to make the size of the reconstructed instant message not exceed the message receiving threshold; and
sending the reconstructed instant message to the receiving terminal.

The technical solutions of the following methods may be optional technical solutions.

The new message body comprises a message body identifier corresponding to the original message body. The method further includes the following steps:
storing the contents of the at least some of the original message bodies and the message body identifiers in the original message bodies; and
after receiving the message body identifiers sent from the receiving terminal, sending the contents of the original message bodies corresponding the sent message body identifiers to the receiving terminal.

The message body identifiers are sent through XML configuration access protocol requests.

The message body identifiers are sent through Hypertext Transfer Protocol messages.

The method includes a step of giving different priorities to different original message bodies according to the types of the message bodies; and the reconstruction is performed based on the priorities of the original message bodies.

The method includes a step of giving different priorities to different original message bodies according to the size of the message bodies; and the reconstruction is performed based on the priorities of the original message bodies.

The new message bodies include description information of the original message bodies.

The description information includes the name of the message body and/or the size of the message body.

The embodiment of the present invention further provides a server for sending instant messages. An instant message includes at least one message body. The server includes:
a comparison apparatus, adapted to compare the size of the instant message with the message receiving threshold of a receiving terminal;
a reconstruction apparatus, connected with the comparison apparatus, under the situation that the size of the instant message is greater than the message receiving threshold, adapted to replace at least some of message bodies of the instant message with new message bodies so as to reconstruct the instant message to make the size of the instant message not exceed the message receiving threshold; and
an apparatus, connected with the reconstruction apparatus, adapted to send the reconstructed instant message.

The technical solutions of the following servers may be optional technical solutions.

The server further includes:
a message storage unit, connected with the reconstruction apparatus, adapted to store the content of the at least some of the original message bodies and the identifiers of the original message bodies; and
an apparatus, connected with the message storage unit, adapted to send the contents of the original message bodies corresponding to the message body identifiers to the receiving terminal after receiving the message body identifiers from the receiving terminal.

The message body identifiers are sent to the server through XML configuration access protocol requests or Hypertext Transfer protocol messages.

The reconstruction apparatus gives different priorities to different original message bodies according to the types of message bodies and reconstructs the instant message based on the priorities of the original message bodies; or, the reconstruction apparatus gives different priorities to different original message bodies according to the size of message bodies and reconstructs the instant message based on the priorities of the original message bodies.

The embodiment of the present invention further provides a system for sending instant messages including a terminal and a server. The server is adapted to send an instant message which includes at least one message body. The server includes:
a comparison apparatus, adapted to compare the size of the instant message with the message receiving threshold of a receiving terminal;
a reconstruction apparatus, connected with the comparison apparatus, under the situation that the size of the instant message is greater than the message receiving threshold, adapted to replace at least some of message bodies of the instant message with new message bodies so as to reconstruct the instant message to make the size of the instant message not exceed the message receiving threshold; and
an apparatus, connected with the reconstruction apparatus, adapted to send the reconstructed instant message.

Alternatively, the server may further include:
a message storage unit, connected with the reconstruction apparatus, adapted to store the content of the at least some of the original message bodies and the identifiers of the original message bodies; and
an apparatus, connected with the message storage unit, adapted to send the contents of the original message bodies corresponding to the message body identifiers to the receiving terminal after receiving the message body identifiers from the receiving terminal.

By using the embodiments of the present invention, according to the received instant message, the receiving terminal can know the message includes which message bodies in all, each replacing message body in at least some of the message bodies respectively corresponding to the message bodies, and the complete content of some message bodies sometimes. With regard to the message bodies replaced by the replacing message body, the receiving terminal can not directly obtain the specific content. When the receiving terminal hopes to obtain the specific content of some replaced message body, the specific content may be obtained by sending a request carrying a message body identifier corresponding to the original message body to the server. If the size of the original message body exceeds the capacity of the receiving terminal, the receiving terminal can obtain the message bodies by visiting the server website and inputting the message body identifier corresponding to the original message body. After the receiving terminal receives the content of some original message body, the content of the message body can be deleted individually on the receiving terminal.

Therefore, the receiving terminal can selectively obtain the content of the message body so as to strengthen users' service experience, strengthen the serviceability of the Messaging AS, and accommodate the need of users better. As far as the operator, the possibility of message sending failure is reduced, and the utilization rate of network resource is improved. In addition, by using the embodiments of the present invention, the receiving terminal with small capacity can receive the instant message with excessive capacity in many times so as to avoid the restriction of the receiving terminal's capacity to the size of the instant message.

### BRIEF DESCRIPTION OF THE DRAWING(S)

Figure 1 shows a typical networking view providing messaging service in prior art;

Figure 2 shows the internal structure schematic view of the Messaging AS in figure 1;

Figure 3 shows the signaling flow of completely sending the instant message to the terminal by using the SIP MESSAGE request in prior art;

Figure 4 shows the signaling flow of completely sending the instant message to the terminal by using SIP INVITE and the MRSP SEND request in prior art;

Figure 5 is a schematic view illustrating the structure of an instant message;

Figure 6 is a schematic view illustrating the structure of the instant message obtained by replacing the message body contained in the instant message in figure 5 with a new message body respectively in accordance with one embodiment of the present invention;

Figure 7 shows the signaling flow of sending an instant message and providing the content of the message body to the terminal by using SIP MESSAGE and Extensible Markup Language (XML) configuration access protocol (XCAP) requests in accordance with one embodiment of the present invention;

Figure 8 shows the signaling flow of sending an instant message and providing the content of the message body to the terminal by using SIP INVITE, MSRP SEND and XCAP requests in accordance with another embodiment of the present invention;

Figure 9 shows the signaling flow of obtaining the message body by visiting a server webpage via a browser in accordance with one embodiment of the present invention;

Figure 10 shows the schematic view illustrating the networking for providing messaging service in one embodiment of the present invention;

Figure 11 shows the schematic view illustrating the internal structure of the Messaging AS in figure 10;

Figure 12 is an example of an actual instant message;

Figure 13 shows the instant message obtained by replacing the message body contained in the instant message in figure 12 with a new message body respectively in accordance with one embodiment of the present invention.

### DETAILED DESCRIPTION

The technical solution of one embodiment of the present invention is provided on the premise that the receiving terminal is an IMS messaging service user.

After the server receives the instant message from the sending party, the server firstly compares the instant message with the message receiving threshold of the receiving terminal. The instant message from the sending party may have one or more message bodies which may exist in the form of multipurpose internet mail extensions (MIME) format. The type of each message body may be text, image, audio or video and so on. The message receiving threshold of the receiving terminal may be configured by default by the Messaging AS (hereinafter referred to as server) or by user custom when the user subscribes to the messaging service and the message receiving threshold is stored in the server. Preferably, the message receiving threshold of the receiving terminal is equal to the maximum size of a receiving message which can be received by the receiving terminal.

With regard to the instant message whose size does not exceed the message receiving threshold, the server sends the instant message in a conventional way. As the above mentioned, one way is to completely send a message to the user by the server via SIP MESSAGE as shown in figure 3. The other way is to completely send a message to the user by the server via SIP INVITE and MSRP SEND as shown in figure 4.

With regard to the instant message whose size exceeds the message receiving threshold, the server reconstructs the instant message as follows: The server replaces at least some of the message bodies contained in the instant message with a new message body respectively so as to make the size of the instant message not exceed the message receiving threshold, splits every content out of at least some of the original message bodies respectively and stores the content in the message storage unit of the server for example.

The user may pre-configure to split all the original message bodies of the instant message or split only some of the original message bodies. When the user configures to split all the original message bodies, the contents of all the original message bodies of the instant message are split out respectively. When the user configures to split some of the original message bodies, the instant message is preferably reconstructed based on a certain priority sequence. For example, the original message body with the highest priority is firstly split out and is replaced by a new message body. After that, the original message body with the second highest priority is split out and is replaced by another new message body. The above processes are executed in turn until the size of the instant message decreases to be less or equal to the message receiving threshold. In one embodiment, the server gives different priorities to different original message bodies according to different types of message bodies, i.e. text, sound, image or video. For example, the priorities of the original message bodies are as follows from high to low: text, sound, image, and video. In one dedicated example of the embodiment, for the message bodies with the same type, the priority sequence is determined according to the size of the original message body. For example, the big original message body is given with a high priority and a small original message body is given with a low priority. In another embodiment, the server gives different priorities to different original message bodies according to different sizes of message bodies. For example, the biggest original message body is given with the highest priority and the second biggest original message body is given with a second highest priority. The above processes continue accordingly. In one dedicated example of the embodiment, for the original message bodies with the same size, the priority sequence is determined according to the type of the message bodies. For example, the priorities of the message bodies are as follows from high to low: text, sound, image, and video.

Alternatively, the ways for splitting the original message bodies in the instant message may be configured by the server by default.

According to the embodiment of the present invention, each original message body split out corresponds to the new message body adapted to replace the original message body. The new message body may be in the format of XML. The new message body includes a message body identifier corresponding to the original message body. Preferably, the new message body also includes the description information (on this meaning, for the sake of simple statement, the new message body is also called description information message body in the context) of the original message body. Preferably, the description information may include the name of the message body and/or the size of the message body. For example, the format of the original message body is as follows:
the type of the message body: type explanation information of the original message body the content of the message body: specific content of the original message body

The corresponding format of the description information message body may be as follows:
message body type: extension type explanation information
message body content: content of the description information message body

In one embodiment, "extension type explanation information" is a fixed value: "application/bodydescMsg+xml". The "content of the description information message body" is as follows:

```
    <?xml version="1.0" ?>
    <itern>
        <nmne> name of message body </name>
        <size> size of message body </size>
        <ID> message body ID·</ID>
        </item>
```

The "name of the message body" may be obtained from the name field in the original message body such as a photograph of my whole family. jpg, my leaving message.wav and so on. If there is no name in the original message body, the server generates a name automatically as the "name of the message body" such as unknown file 1, unknown file 2 and so on. The "size of the message body" may be obtained by calculating according to the size of the original message body. The "message body ID" may be generated by the server when the server is storing the split content of the original message body. The server may exclusively determine the original message body by the ID.

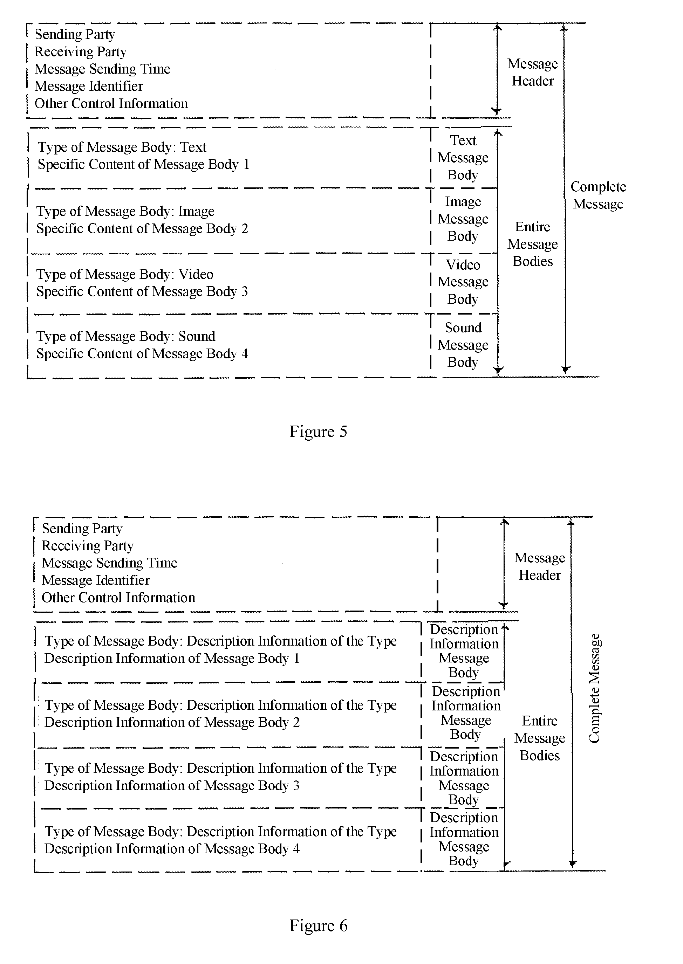

According to the embodiments of the present invention, at least some of the message bodies contained in the instant message are respectively replaced with the description information message bodies. The figure 5 and the figure 6 generally show this process. It should be noted that the "description information of the message body 1", ... , " the description information of the message body 4" in figure 6 include the message body identifiers corresponding to the original message bodies.

After reconstructing the instant message, the server sends the reconstructed new instant message to the receiving terminal. This may be implemented through SIP MESSAGE or SIP INVITE and MSRP SEND.

The new instant message may have two possible situations. One situation is that all the original message bodies in the instant message are replaced to be description information message bodies. The other situation is that some of the original message bodies in the instant message are replaced to be description information message bodies and the other original message bodies are not be replaced. Therefore, the receiving terminal may directly obtain the specific content of the other original message bodies that are not replaced. No matter in which situation, after the receiving terminal receives the new instant message, with regard to the message bodies replaced to be description information message bodies, the receiving terminal can not directly obtain the specific content. When the receiving terminal wants to obtain the specific content of some message body, the receiving terminal, e.g. a cell phone, may obtain the specific content by sending an XCAP (Extensible Configuration Access Protocol) request carrying the message body identifier corresponding to the message body to the server. Generally speaking, the description information message body includes the name of the message body and/or the size of the message body. Under this situation, the receiving terminal determines the original message body expected to be obtained preferably according to the name of the message body and/or the size of the message body.

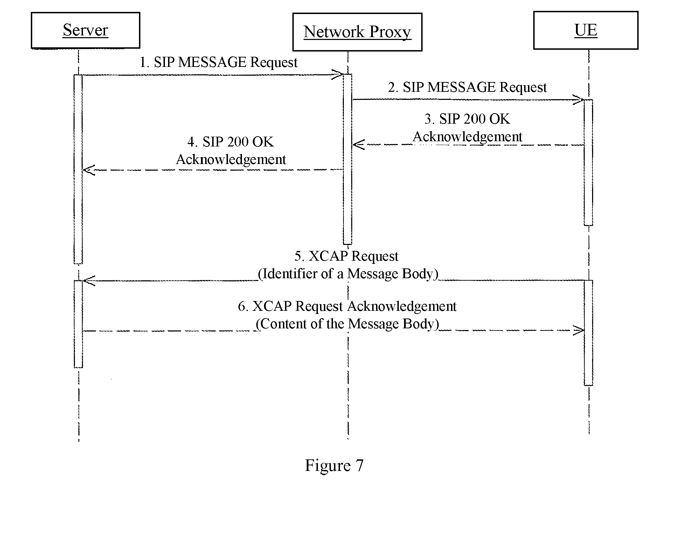

Figure 7 shows the signaling flow of sending an instant message and providing the content of the message body to the terminal by using SIP MESSAGE and XCAP requests in accordance with one embodiment of the present invention, specifically as follows:

Steps 1 to 2, the server sends an SIP MESSAGE request to the receiving terminal. At least some of the original message bodies are respectively replaced with a description information message body in the format of XMI;

Steps 3 to 4, the receiving terminal returns the received message acknowledgement;

Step 5, the receiving terminal sends an XCAP request for obtaining an original message body. The XCAP request includes a message body identifier corresponding to the original message body;

Step 6, the server returns the content of the original message body to the receiving terminal.

Practically, the steps 5 to 6 may be repeated for many times.

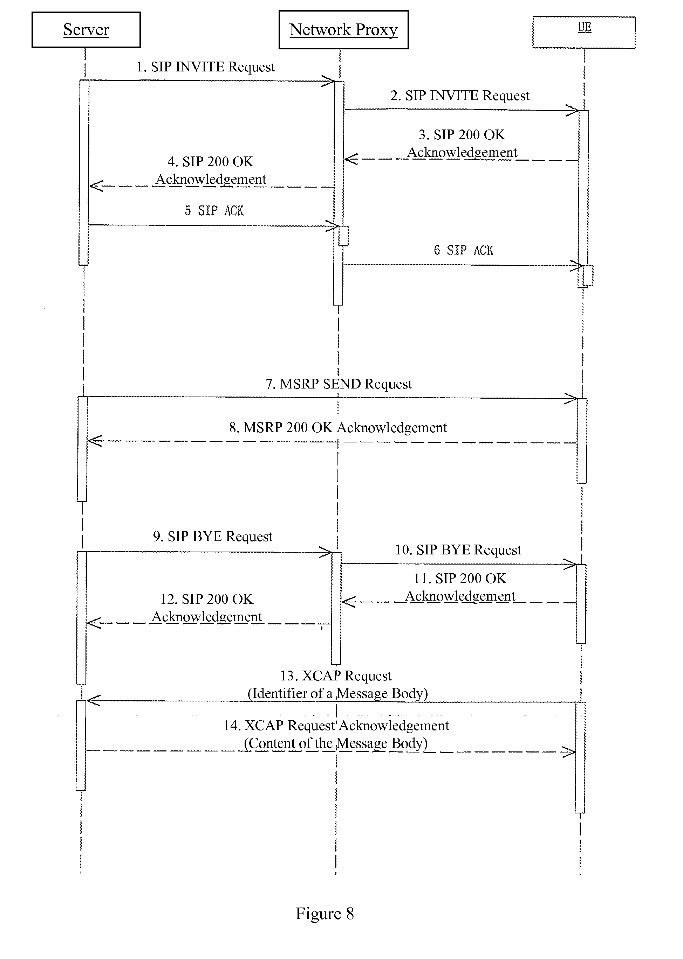

Figure 8 shows the signaling flow of sending an instant message and providing the content of the message body to the receiving terminal by using SIP INVITE, MSRP SEND and XCAP requests in accordance with another embodiment of the present invention, specifically as follows:

Steps 1 to 2, the server sends the SIP INVITE to the receiving terminal for requesting to establish an MSRP link with the receiving terminal;

Steps 3 to 4, the receiving terminal returns acknowledgement to the server and returns acknowledgement for establishing the MSRP link with the server;

Steps 5 to 6, the server returns confirmation information to the receiving terminal;

Step 7, after the MSRP link between the server and the receiving terminal is established, the message body is sent to the receiving terminal via MSRP SEND;

Step 8, the receiving terminal returns acknowledgement of receiving the MSPP SEND message;

Steps 9 to 10, the server sends SIP BYE to the receiving terminal for noticing the receiving terminal to stop the SIP session and cut off the MSRP link;

Steps 11 to 12, the receiving terminal returns acknowledgement of receiving the SIP BYE;

Step 13, the receiving terminal sends a XCAP request for obtaining an original message body. The XCAP request includes a message body identifier corresponding to the original message body;

Step 14, the server returns the content of the original message body to the receiving terminal.

Practically, the steps 13 to 14 may be repeated for many times.

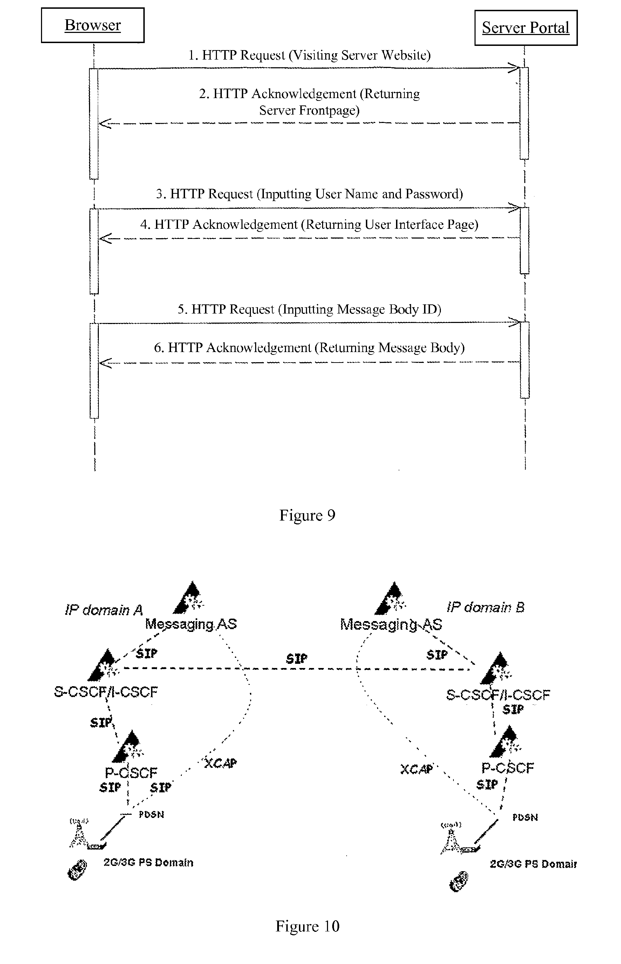

If the size of the message body to be obtained by the receiving terminal exceeds the capacity of the receiving terminal, the receiving terminal may obtain the message body by logging in the server PROTAL through HTTP protocol. The figure 9 illustrates the process. The receiving terminal, e.g. PC, may visit the website of the server via a browser so as to enter the front page of the server, input a user name, a password and so on to enter the user interface, and input the message body identifier corresponding to the original message body to obtain the original message body.

After the receiving terminal receives the content of some original message body and displays it, the content of the original message body may be deleted individually on the receiving terminal.

The receiving terminal adapted for the embodiments of the present invention may be a cell phone, a PC or another electronic device with communication functions.

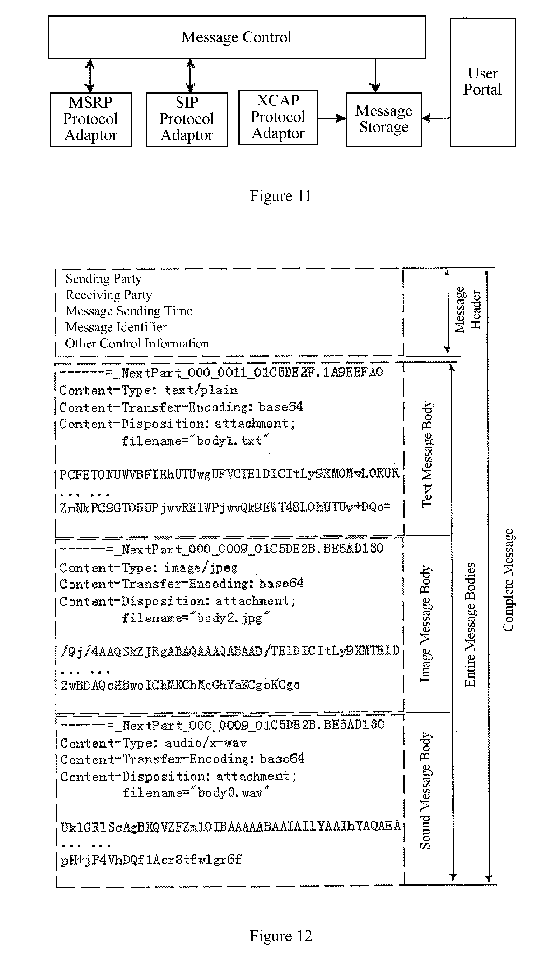

Figure 10 shows the schematic view illustrating the networking for providing messaging service in one embodiment of the present invention. The receiving terminal may intercommunicate with the Messaging AS by sending an XCAP request. Comparing with the networking figure in related art shown in figure 1, the Messaging AS in figure 10 should be able to process the XCAP request. The figure 11 shows the schematic view of the internal structure of the Messaging AS in figure 10. Comparing with the Messaging AS in related art shown in figure 2, the Messaging AS in accordance with the embodiment of the present invention is added with a message storage unit, an XCAP protocol adaptor and a user PORTAL. The message storage unit is in charge of storing the split message body. The XCAP protocol adaptor and the user PORTAL are in charge of obtaining the original message body from the message storage unit and providing the original message body to the receiving terminal.

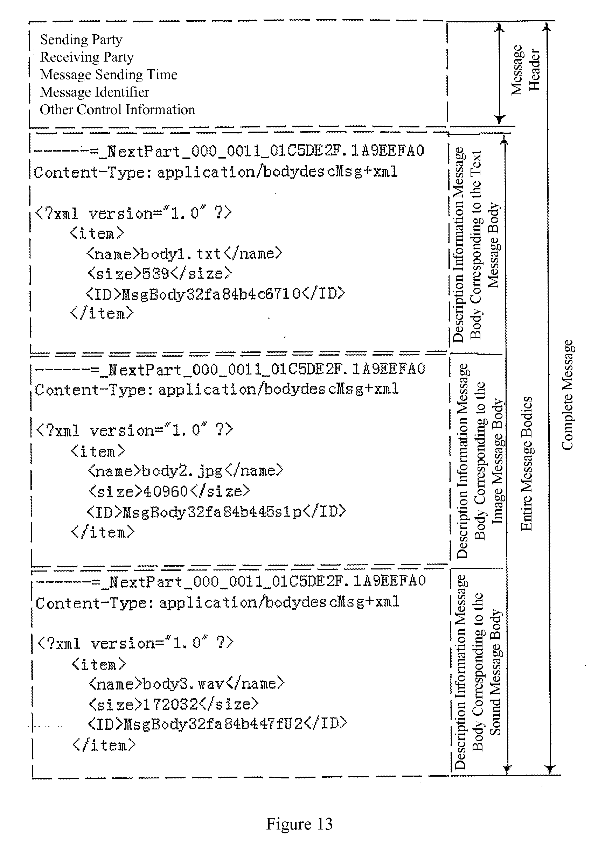

Finally, a specific example for sending the instant message in accordance with one embodiment of the present invention is provided so as to know the embodiments of the present invention more intuitively. The user A sends one instant message with many message bodies to the user B. Hypothetically, the size of the instant message is greater than the biggest receiving message size of the user B's terminal. The instant message sent by the user A is shown in figure 12 (for the sake of simplicity, the message header irrelated to the technical solution of the embodiments of the present invention is shown briefly). The message sent by the server to the user B by using one embodiment of the present invention is shown as figure 13. If the user B hopes to obtain a dedicated message body, the user B may send the following request:
GET
   http: //ap.huawei.com/services/fetchMsgBody/users/sip: userl@huawei.com/Messaging/∼∼/ Messaging/message[@ID="MsgBody32fa84b447fU2"]HTTP/1.1
   Host: ap.huawei.com

Accordingly, a example for the acknowledgement returned by the server (ignoring the header field irrelated to the technical solution in accordance with the embodiments of the present invention) is as follows:

```
HTTP/1.1 200 OK
    Content-Type: Application/XML
    Content-Length: 342
    <?xml version= "1.0" ?>
    <MsgBody MsglD= "MsgBoay32fa84b447fU2">
    <Content-Type>
    audio/x-wav
    </Content-Type>
    <Content-Transfer-Encoding>
    base64
    </Content-Transfer-Encoding>
    <Content-Disposition filename= "body3.wav" >
    attachment
    </Content-Disposition>
    <body>
 Uk1GRIScAgBXQVZFZm10IBAAAAABAAIA11YAAIhYAQAEA
    pHjP4VhDQf1Acr8tfwMoGhYa6fV
    </body>
    </MsgBody>
```

Although the embodiments of the present invention are described as the above mentioned, obviously, the embodiments may be changed in many different ways. For example, the content the split original message body may be stored in an apparatus different from the server. The description information message body may not in the format of XML. The user may obtain the content of the dedicated message body from the server by other protocols besides the XCAP. Therefore, the scope of the present invention shall be determined by the allowed claims and legal equivalents thereof instead of the illustrated embodiments.

## Claims

1. A method for sending IP Multimedia Subsystem, IMS, instant messages, wherein an instant message comprises at least one message body, and a receiving terminal has a message receiving threshold, the method comprising:
reconstructing the instant message by replacing at least one of the original message bodies in the instant message with new message bodies so as to make the size of the reconstructed instant message not exceed the message receiving threshold, when the size of the instant message is greater than the message receiving threshold, and
sending the reconstructed instant message to the receiving terminal.

2. The method according to claim 1, wherein the new message body comprises a message body identifier corresponding to the original message body, and the method further comprises:
storing contents of the at least one of the original message bodies replaced and the message body identifiers of the original message bodies replaced ; and
receiving the message body identifiers sent from the receiving terminal,
sending the contents of the original message bodies corresponding with the received message body identifiers to the receiving terminal.

3. The method according to claim 2, wherein the message body identifiers are sent through XML configuration access protocol requests.

4. The method according to claim 2, wherein the message body identifiers are sent through Hypertext Transfer Protocol messages.

5. The method according to claim 1, comprising :
giving different priorities to different original message bodies according to the types of the message bodies; and
wherein the reconstruction is performed based on the priorities of the original message bodies.

6. The method according to claim 1, comprising:
giving different priorities to different original message bodies according to the size of the message bodies; and
wherein the reconstruction is performed based on the priorities of the original message bodies.

7. The method according to claim 1, wherein the new message bodies comprise description information of the original message bodies.

8. The method according to claim 7, wherein the description information comprises at least one of the name of the message body and/or the size of the message body.

9. A server for sending instant messages, wherein an instant message comprises at least one message body, and the server comprises:
a comparison apparatus, adapted to compare the size of the instant message with a message receiving threshold of a receiving terminal;
a reconstruction apparatus, adapted to reconstruct the instant message by replacing at least one of the original message bodies in the instant message with new message bodies so as to make the size of the reconstructed instant message not exceed the message receiving threshold, when the size of the instant message is greater than the message receiving threshold; and
an apparatus, connected with the reconstruction apparatus, adapted to send the reconstructed instant message.

10. The server according to claim 9, wherein the server further comprises:
a message storage unit, connected with the reconstruction apparatus, adapted to store contents of the at least one of the original message bodies replaced and the identifiers of the original message bodies replaced; and
wherein the sending apparatus is further adapted to send the contents of the original message bodies corresponding to the message body identifiers to the receiving terminal when receiving the message body identifiers from the receiving terminal.

11. The server according to claim 10, wherein the message body identifiers are sent to the server through XML configuration access protocol requests or Hypertext Transfer protocol messages.

12. The server according to claim 9, wherein the reconstruction apparatus gives different priorities to different original message bodies according to the types of message bodies and reconstructs the instant message based on the priorities of the original message bodies; or, the reconstruction apparatus gives different priorities to different original message bodies according to the size of message bodies and reconstructs the instant message based on the priorities of the original message bodies.

13. A system for sending instant messages, comprising a terminal and a server, the server, adapted to send an instant message which comprises at least one message body, comprising:
a comparison apparatus, adapted to compare the size of the instant message with the message receiving threshold of a receiving terminal;
a reconstruction apparatus, adapted to reconstruct the instant message by replacing at least one of the original message bodies in the instant message with new message bodies so as to make the size of the reconstructed instant message not exceed the message receiving threshold, when the size of the instant message is greater than the message receiving threshold; and
an apparatus, connected with the reconstruction apparatus, adapted to send the reconstructed instant message.

14. the system according to claim 13, wherein the server further comprises:
a message storage unit, connected with the reconstruction apparatus, adapted to store contents of the at least one of the original message bodies replaced and the identifiers of the original message bodies replaced; and
wherein the sending apparatus is further adapted to send the contents of the original message bodies corresponding to the message body identifiers to the receiving terminal when receiving the message body identifiers from the receiving terminal.
